(19)

Europäisches
Patentamt
European
Patent Office
Office européen
des brevets

(11) **EP 3 101 222 A1**

(12) **EUROPEAN PATENT APPLICATION**

(43) Date of publication:
**07.12.2016 Bulletin 2016/49**

(51) Int Cl.:
**E21B 43/24** *(2006.01)*          **E21B 47/06** *(2012.01)*
**G01N 25/60** *(2006.01)*

(21) Application number: **15170795.7**

(22) Date of filing: **05.06.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Geomax Energy Systems LLC - Oman
P.C. 136 Muscat (OM)**

(72) Inventor: **Al Salmi, Salim Saif Basher
PC 136 Alkhuwair (OM)**

(74) Representative: **Thiel, Christian
Schneiders & Behrendt
Rechts- und Patentanwälte
Huestrasse 23
(Westfalenbankgebäude)
44787 Bochum (DE)**

(54) **STEAM QUALITY - MEASURING DEVICE**

(57)     Invention relates to a down-hole device for measuring steam flow and quality in a well, said device comprising an elongate tube-like housing, a power supply, a spinner arranged at the down-hole end of the housing, 2 pressure sensors arranged at a distance h to each other at the periphery of the housing, and data storage means.

## Description

The invention relates to a down-hole device for measuring steam flow and quality in a well.

The evaluation of fluid flows within a well bore is a frequently encountered problem in the oil and gas production industry. There are a number of different flow regimes including multi-phase fluid flows. Factors influencing the flow regimes can include a degree of borehole deviation and proportion of the phases, relative differences in phase densities, surface tension and viscosity of the phases as well as velocity, pressure and temperature.

Understanding the fluid flow regime in a well may be used to understand the performance of a production well. A production log records one or more in-situ measurements that describe the nature and behavior of fluids in or around the borehole during a production operation, including an injection operation. Production logs can provide for example information about dynamic well performance and the productivity or injectivity of different zones. This information may be used to help diagnose problem wells or monitor the results of a stimulation or completion.

Steam injection is a means that is frequently used to stimulate and enhance oil production from subsurface reservoirs. For operation of a well stimulated by steam injection it is essential to know the steam quantity injected into the reservoir and the steam quality reaching the reservoir. The steam quality is defined as the ratio of vapor mass to total mass of vapor and liquid.

Steam injection is used, for example, in heavy oil reservoirs to raise the oil temperature and reduce its viscosity. It is essential, that a high percentage of the steam reaches the reservoir. However, a certain degree of heat loss to the surrounding formation is inevitable on the way down-hole, this resulting in the conversion of steam into liquid water.

A certain degree of heat loss certainly is tolerable. However, for the commercial performance it is essential that a high percentage of the injected steam reaches the reservoir and transfers its heat to the oil contained therein. It is therefore important to have knowledge of the quality (percentage) of steam that reaches the reservoir.

The quality of the steam at the time of injection into the well is known - 100 % of the injected fluid is steam. Hence, the quality is 1.0 by definition.

The quality of the steam decreases with its way down-hole due to transfer to the surrounding formations. At the entrance to the reservoir, the quality is 1.0-x, where x is the fraction of liquid water divided by total fluid (liquid water plus steam).

The normal way for steam quality evaluation is by measurement of pressure, temperature and mass flow and comparing the data obtained with experimental data contained in diagrams and tables. However, down-hole conditions mostly are not ideal so that such estimations do not necessarily correspond to reality.

From WO 2012/085 770 A1 an apparatus and a method for generating steam quality data is known that, among others, relies on flow data obtained from a spinner system. Flow data obtained from spinner systems are influenced by many parameters and not reliable.

It is an object of the present invention to provide a system that allows to calculate steam quality data in a well from down-hole measurements that are highly reliable.

According to the invention, a well regularly is a hydrocarbon (production) well. This includes oil wells, in particular oil wells for the production of heavy oils.

It has been found that pressure data can be obtained with high reliability. Pressure data allow the calculation of steam quality data with high precision from few measurements only. Such measurements can be obtained by means of the probe equipped with the necessary sensors.

Accordingly, the present invention relates to a down-hole device for measuring steam flow and quality in an oil well comprising an elongate tube-like housing, a power supply, a spinner arranged at the down-hole end of the housing, pressure sensors arranged at a distance h to each other at the periphery of the housing, and data storage means.

The device or tool of the invention has the form of an elongate tube, which may have a diameter of e.g. 4 to 8 cm and a length of 2.0 to 5.0 m. At the distal end of the device, i.e. at the down-hole end, there is a spinner which is designed to measure the fluid flow velocity. From the flow velocity, the steam input into the well and the active diameter of the well, approximate data for the mass flow and the steam quality can be calculated.

The tube-like housing comprises the power supply of the device and the data storage means, where the data from the spinner and the sensors of the device are stored and possibly processed. The power supply preferably is a conventional battery.

The housing comprises at its periphery 2 pressure sensors, which are arranged at a distance h to each other. The pressure sensors are conventional ones for detecting high pressures in a high temperature environment. Separation of the sensors is necessary in order to detect and measure pressure differences at two different measuring points. The distance should not be too small, but be in the range of about 0.60 to 2.40 m and preferably in the range of about 1.50 to 2.00 m.

In addition, the device of the invention may comprise two temperature sensors, which are also arranged at a distance h. The distance h between the temperature sensors should be the same as with the pressure sensors. Preferably, the pressure and temperature sensors are at the same location of the device so that the pressure data obtained can be linked to the temperature at the measuring location.

Conventionally, down-hole rates are estimated on the basis of spinner data. The spinner is measuring the number of revolutions, which can be calibrated to give the flow rates. Steam input flow rates and measured flow rates down-hole can be used calculate the steam quality. However, spinner data are not very reliable, as indicated previously.

According to the invention, more precise data be obtained from pressure measurements, according to the following equations:

(1)

$$DHSQ = \frac{Mv}{Ml+Mv}$$

DHSQ: Steam Quality, ratio.

Mv: Vapor Mass

Ml: Liquid Mass

Conversion of this equation results in equation (2) as follows:

(2)

$$DHSQ = 1 - \frac{\left[\frac{\Delta P \pi r^2}{g}\right]}{MOWE}$$

ΔP: Pressure Difference, P2-P1

g: Gravity

MOWE: Mass Of Water Equivalent = Mv + Ml

r: effective radius between pipe internal diameter and tool outside diameter

From equation (2) results, that pressure difference and steam quality are linked and the pressure difference can be used to calculate the steam quality.

The present device gives steam quality data via two individual methods, namely by conversion of spinner data and pressure difference data. Sensored pressure data are closely linked to the temperature, measuring the temperature at the site of the pressure sensor therefore may be important. However, normally the temperature difference between the two measuring points will not be great.

The present device is a high temperature device which allows measuring the relevant down-hole data at temperatures up to 400°C and pressures up to 1 kbar. It is self understanding that the materials the device and its components are made from are resistant over the whole temperature and pressure range.

The device of the invention will be lowered into a well by means of a cable, in a known technology. It may be equipped with distance elements in order to keep a constant distance to the inner wall of the well. The distance elements may be part of the spinner basket.

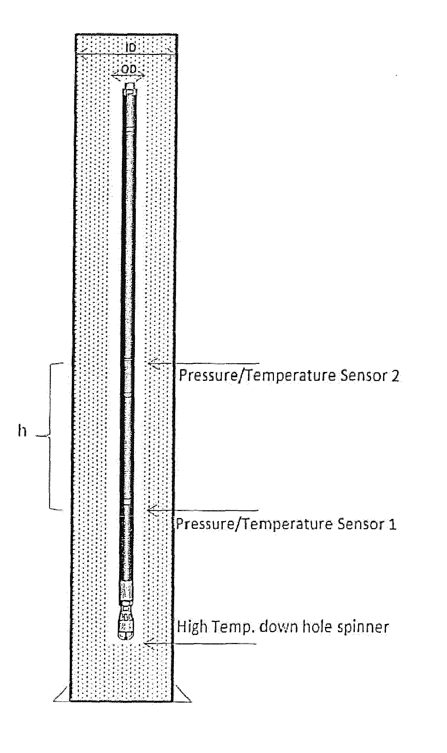

The attached drawing shows a down-hole measuring device according to the invention, where the tube-like housing has a diameter of approximately 5 cm and a length of approximately 3.50 m. The device comprises a high temperature down-hole spinner head at its down-hole end. The tube-like housing comprises a battery, a data storage unit and two sensors each for pressure and temperature at a distance h. h is in the range of approximately 1.50 m.

The tool is attached to a cable, which is designed to lower the device into a well which is flooded with high pressure high temperature steam.

**Claims**

1. Down-hole device for measuring steam flow and quality in a hydrocarbon well, said device comprising an elongate tube-like housing,
a power supply,
a spinner arranged at the down-hole end of the housing,
2 pressure sensors arranged at a distance h to each other at the periphery of the housing, and
data storage means.

2. The device of claim 1, **characterized by** two temperature sensors arranged at a distance h to each other.

3. The device of claim 2, where the pressure and temperature sensors are each seperated by the same distance h.

4. The device of claim 2 or 3, where the pressure and temperature sensors are at the same location at the periphery of the device.

5. The device of anyone of claims 1 to 4, where the distance h is 0.60 to 2.40 m.

6. The device of anyone of claims 1 to 5, **characterized in that** the power supply is a battery located at the rear end of the housing.

7. The device of anyone of claims 1 to 6, **characterized in that** the storage means are means for storing pressure data from the pressure sensors, flow data from the spinner and optionally temperature data from the temperature sensors.

8. The device of anyone of claims 1 to 7, **characterized by** a connector to a cable for being the lowered into an oil well.

9. Use of the device of anyone of claims 1 to 8 for measuring the steam quality in a hydrocarbon well.

Europäisches
Patentamt

European
Patent Office

Office européen
des brevets

# EUROPEAN SEARCH REPORT

Application Number

EP 15 17 0795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/148269 A1 (SCHLUMBERGER CA LTD [CA]; SCHLUMBERGER SERVICES PETROL [FR]; SCHLUMBER) 27 December 2007 (2007-12-27) * paragraphs [0040], [0041]; figure 10 * * paragraphs [0038], [0039], [0047]; figures 8,9 * * the whole document * | 1-9 | INV. E21B43/24 E21B47/06 G01N25/60 |
| X,D | WO 2012/085770 A1 (SCHLUMBERGER TECHNOLOGY BV [NL]; SCHLUMBERGER CA LTD [CA]; SCHLUMBERGE) 28 June 2012 (2012-06-28) * the whole document * * Logging tools (e.g., Production Services Platform, PSP) may be used in production logging tool 104; paragraphs [0020] - [0022], [0041] * & Schlumberger: "PS Platform Three-phase production logging Production services platform", <br> , 20 November 2014 (2014-11-20), XP055229714, Retrieved from the Internet: URL:http://www.slb.com/~/media/Files/produ ction/product_sheets/wireline_cased_hole/p roduction_logging/ps_platform_ds.pdf [retrieved on 2015-11-19] * two pressure gauges UNIGAGE; page 2 * | 1-4,6-9 | |
| A | US 2009/271129 A1 (MONMONT FRANCK BRUNO JEAN [GB] ET AL) 29 October 2009 (2009-10-29) * paragraphs [0069], [0072]; figure 3 * * paragraphs [0074], [0086]; figure 4 * * the whole document * * paragraphs [0012], [0013]; claims 14,29 * | 1-9 | TECHNICAL FIELDS SEARCHED (IPC) <br><br> E21B G01N |

-/--

The present search report has been drawn up for all claims

| Place of search | Date of completion of the search | Examiner |
|---|---|---|
| The Hague | 6 January 2016 | van Berlo, André |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 17 0795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Spe Davarzanl ET AL: "Analysis of Geothermal Wells With Simultaneous Logging Instruments", , 1 September 1989 (1989-09-01), XP055229878, Retrieved from the Internet: URL:https://www.onepetro.org/download/jour nal-paper/SPE-16818-PA?id=journal-paper/SP E-16818-PA [retrieved on 2015-11-20] * pressure and pressure difference; figures 1,4 * | 1-9 | |
| A | US 2008/066537 A1 (HEGEMAN PETER S [US] ET AL) 20 March 2008 (2008-03-20) * paragraphs [0076] - [0078]; figures 11,12 * | 1 | |
| A | US 5 182 939 A (CHIEN SZE-FOO [US] ET AL) 2 February 1993 (1993-02-02) * column 3, line 61 - column 4, line 5; figure 1 * * the whole document * | 1 | |
| A | US 5 361 632 A (MAGNANI CHARLES F [US]) 8 November 1994 (1994-11-08) * claim 1; figure 1 * | 1 | |
| A | WO 2014/190252 A1 (SCHLUMBERGER CA LTD [CA]; SCHLUMBERGER SERVICES PETROL [FR]; SCHLUMBER) 27 November 2014 (2014-11-27) * paragraph [0053]; figure 7 * | 1 | |

TECHNICAL FIELDS SEARCHED (IPC)

The present search report has been drawn up for all claims

| Place of search | Date of completion of the search | Examiner |
|---|---|---|
| The Hague | 6 January 2016 | van Berlo, André |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 3 101 222 A1

### ANNEX TO THE EUROPEAN SEARCH REPORT
### ON EUROPEAN PATENT APPLICATION NO.

EP 15 17 0795

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2016

| Patent document cited in search report | | Publication date | Patent family member(s) | | Publication date |
|---|---|---|---|---|---|
| WO 2007148269 | A1 | 27-12-2007 | AR | 061493 A1 | 03-09-2008 |
| | | | CA | 2659580 A1 | 27-12-2007 |
| | | | CN | 101473104 A | 01-07-2009 |
| | | | EA | 200970032 A1 | 30-06-2009 |
| | | | EG | 26708 A | 15-06-2014 |
| | | | MY | 151633 A | 30-06-2014 |
| | | | US | 2007289739 A1 | 20-12-2007 |
| | | | WO | 2007148269 A1 | 27-12-2007 |
| WO 2012085770 | A1 | 28-06-2012 | EP | 2656021 A1 | 30-10-2013 |
| | | | EP | 2656022 A2 | 30-10-2013 |
| | | | EP | 2656055 A1 | 30-10-2013 |
| | | | US | 2012160011 A1 | 28-06-2012 |
| | | | US | 2012166108 A1 | 28-06-2012 |
| | | | US | 2012166157 A1 | 28-06-2012 |
| | | | WO | 2012085770 A1 | 28-06-2012 |
| | | | WO | 2012085771 A1 | 28-06-2012 |
| | | | WO | 2012085772 A2 | 28-06-2012 |
| US 2009271129 | A1 | 29-10-2009 | CA | 2722303 A1 | 29-10-2009 |
| | | | CO | 6311039 A2 | 22-08-2011 |
| | | | EC | SP10010565 A | 30-11-2010 |
| | | | EP | 2274603 A1 | 19-01-2011 |
| | | | US | 2009271129 A1 | 29-10-2009 |
| | | | WO | 2009130621 A1 | 29-10-2009 |
| US 2008066537 | A1 | 20-03-2008 | BR | PI0703390 A2 | 24-03-2009 |
| | | | US | 2008066537 A1 | 20-03-2008 |
| US 5182939 | A | 02-02-1993 | NONE | | |
| US 5361632 | A | 08-11-1994 | NONE | | |
| WO 2014190252 | A1 | 27-11-2014 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012085770 A1